# EUROPEAN PATENT APPLICATION

(11) **EP 4 465 573 A1**
(43) Date of publication of application: **20.11.2024**
(21) Application number: 23737120.8
(22) Date of filing: 06.01.2023
(51) Int. Cl.: H04L 5/00

(54) **DMRS TRANSMISSION METHOD AND APPARATUS, AND STORAGE MEDIUM**

(30) Priority: 10.01.2022 CN 202210022051
(71) Applicant: Datang Mobile Communications Equipment Co., Ltd., Beijing 100085 (CN)
(72) Inventor: YE, Xijin, Beijing 100085 (CN); BAI, Wei, Beijing 100085 (CN)
(74) Representative: Studio Torta S.p.A.
(86) International application number: PCT/CN2023/070818
(87) International publication number: WO 2023/131258

(57) **Abstract**

Provided in the embodiments of the present disclosure are a DMRS transmission method and apparatus, and a storage medium. The method comprises: determining a first DMRS pattern set on the basis of a frequency selective fading degree value on a target PRB; and sending a DMRS on the target PRB on the basis of the first DMRS pattern set. By means of the DMRS transmission method and apparatus, and the storage medium provided in the embodiments of the present disclosure, a DMRS pattern set is determined according to a frequency selective fading degree value on a PRB, and a UE sends a DMRS on the PRB on the basis of the DMRS pattern set, thereby reducing the possibility of pilot frequency collision, and improving the accuracy of channel estimation.

## Description

### CROSS-REFERENCES TO RELATED APPLICATIONS

The present application claims priority to Chinese application No. 2022100220519 filed on January 10, 2022, entitled "DMRS Transmission Method and Apparatus, and Storage Medium", which is hereby incorporated by reference in its entirety.

### FIELD

The present application relates to the field of communication, and in particular, to methods and apparatuses for transmitting demodulation reference signal (DMRS) and a storage medium.

### BACKGROUND

In order to meet low-cost, high-reliability and low-latency access requirements of the 6th generation mobile communication (6G) network in a scenario of massive terminals in the future, multi user MIMO (MU-MIMO) non-orthogonal multiple access (NOMA) will become a research hotspot.

Different from a traditional orthogonal transmission scheme, NOMA adopts non-orthogonal transmission at a transmitting end, and performs multi-user signal separation through successive interference cancellation (SIC) at a receiving end. The performance of SIC at the receiving end largely depends on accuracies for channel estimation and channel state information (CSI) obtainment. Since multiple users will multiplex on same time-frequency resources, pilots of different users will affect each other, and pilot collisions will occur, which will affect an accuracy of a system when estimating the CSI.

### BRIEF SUMMARY

Embodiments of the present application provide methods and apparatuses for transmitting demodulation reference signal (DMRS), and storage mediums, to solve a problem of inaccurate channel estimation results in the related art.

An embodiment of the present application provides a method for transmitting a demodulation reference signal (DMRS), including:
determining a first DMRS pattern set based on a frequency selective fading degree value on a target physical resource block (PRB); and
transmitting the DMRS on the target PRB based on the first DMRS pattern set.

In an embodiment, the method further includes:
receiving downlink channel state information (CSI) transmitted from a network device on the target PRB; and
determining the frequency selective fading degree value on the target PRB based on the downlink CSI.

In an embodiment, determining the first DMRS pattern set based on the frequency selective fading degree value on the target PRB includes:
determining a value interval to which the frequency selective fading degree value on the target PRB belongs; and
determining the first DMRS pattern set based on the value interval and a target mapping relationship table, where the target mapping relationship table includes a one-to-one mapping relationship between the value interval to which the frequency selective fading degree value belongs and a DMRS pattern set.

In an embodiment, DMRS patterns in different DMRS pattern sets correspond to different densities of DMRS, and DMRS patterns in the same DMRS pattern set correspond to the same density of DMRS.

In an embodiment, a larger frequency selective fading degree value corresponds to a larger density of DMRS, and a smaller frequency selective fading degree value corresponds to a smaller density of DMRS.

In an embodiment, a density of DMRS represents a number of resource elements (REs) occupied when transmitting the DMRS on one orthogonal frequency division multiplexing (OFDM) symbol of one PRB.

In an embodiment, transmitting the DMRS on the target PRB based on the first DMRS pattern set includes:
selecting a target DMRS pattern from the first DMRS pattern set; and
transmitting the DMRS on the target PRB based on the target DMRS pattern.

In an embodiment, transmitting the DMRS on the target PRB based on the first DMRS pattern set includes:
transmitting first information to the network device, where the first information is used to indicate the first DMRS pattern set;
receiving second information transmitted from the network device, where the second information is used to indicate a target DMRS pattern, the target DMRS pattern is selected from the first DMRS pattern set by the network device after receiving the first information; and
transmitting the DMRS on the target PRB based on the target DMRS pattern.

In an embodiment, the method further includes:
indicating, to the network device, a repeated transmission position for repeatedly transmitting the DMRS on a time domain of the target PRB.

In an embodiment, transmitting the DMRS on the target PRB based on the first DMRS pattern set includes:
transmitting the DMRS on the target PRB based on the first DMRS pattern set and states of DMRS patterns in different DMRS pattern sets being used currently.

In an embodiment, the method further includes:
receiving third information transmitted from the network device, where the third information is used to indicate the states of DMRS patterns in different DMRS pattern sets being used currently.

In an embodiment, transmitting the DMRS on the target PRB based on the first DMRS pattern set and the states of DMRS patterns in different DMRS pattern sets being used currently includes:
selecting a second DMRS pattern set in case that a state of DMRS patterns in the first DMRS pattern set being used currently is a crowded state, where a density of DMRS corresponding to DMRS patterns in the second DMRS pattern set is larger than a density of DMRS corresponding to DMRS patterns in the first DMRS pattern set; and
transmitting the DMRS on the target PRB based on the second DMRS pattern set.

In an embodiment, transmitting the DMRS on the target PRB based on the first DMRS pattern set and the states of DMRS patterns in different DMRS pattern sets being used currently includes:
selecting a third DMRS pattern set in case that a state of DMRS patterns in the first DMRS pattern set being used currently is a crowded state and there is no second DMRS pattern set, where a density of DMRS corresponding to DMRS patterns in the second DMRS pattern set is larger than a density of DMRS corresponding to DMRS patterns in the first DMRS pattern set, and a density of DMRS corresponding to DMRS patterns in the third DMRS pattern set is smaller than the density of the DMRS corresponding to DMRS patterns in the first DMRS pattern set; and
transmitting the DMRS on the target PRB based on the third DMRS pattern set.

An embodiment of the present application further provides a method for transmitting a demodulation reference signal (DMRS), including:
transmitting downlink channel state information (CSI) on a target physical resource block (PRB), where the downlink CSI is used to determine a frequency selective fading degree value on the target PRB, and the frequency selective fading degree value is used to determine a first DMRS pattern set; and
receiving the DMRS, where the DMRS is transmitted from a terminal on the target PRB based on the first DMRS pattern set.

In an embodiment, receiving the DMRS includes:
determining a target DMRS pattern, where the target DMRS pattern is a DMRS pattern selected by the terminal from the first DMRS pattern set; and
receiving the DMRS on the target PRB based on the target DMRS pattern.

In an embodiment, receiving the DMRS includes:
receiving first information transmitted from the terminal, where the first information is used to indicate the first DMRS pattern set;
selecting a target DMRS pattern from the first DMRS pattern set;
transmitting second information to the terminal, where the second information is used to indicate the target DMRS pattern; and
receiving the DMRS on the target PRB based on the target DMRS pattern.

In an embodiment, receiving the DMRS includes:
determining, by the terminal, a repeated transmission position for repeatedly transmitting the DMRS on a time domain of the target PRB; and
receiving the DMRS on the target PRB based on the repeated transmission position.

In an embodiment, the method further includes:
transmitting third information to the terminal, where the third information is used to indicate states of DMRS patterns in different DMRS pattern sets being used currently.

In an embodiment, receiving the DMRS includes:
receiving the DMRS in case that a state of DMRS patterns in the first DMRS pattern set being used currently is a crowded state, where the DMRS is transmitted from the terminal on the target PRB based on a second DMRS pattern set, and a density of DMRS corresponding to DMRS patterns in the second DMRS pattern set is larger than a density of DMRS corresponding to DMRS patterns in the first DMRS pattern set.

In an embodiment, receiving the DMRS includes:
receiving the DMRS in case that a state of DMRS patterns in the first DMRS pattern set being used currently is a crowded state and there is no second DMRS pattern set, where the DMRS is transmitted from the terminal on the target PRB based on a third DMRS pattern set, a density of DMRS corresponding to DMRS patterns in the second DMRS pattern set is larger than a density of DMRS corresponding to DMRS patterns in the first DMRS pattern set, and a density of DMRS corresponding to DMRS patterns in the third DMRS pattern set is smaller than the density of the DMRS corresponding to DMRS patterns in the first DMRS pattern set.

An embodiment of the present application further provides a terminal, including a memory, a transceiver and a processor,
where the memory is used to store a computer program, the transceiver is used to transmit and receive data under control of the processor, and the processor is used to read the computer program in the memory and perform operations of:
determining a first demodulation reference signal (DMRS) pattern set based on a frequency selective fading degree value on a target physical resource block (PRB); and
transmitting a DMRS on the target PRB based on the first DMRS pattern set.

In an embodiment, the operations further include:
receiving downlink channel state information (CSI) transmitted from a network device on the target PRB; and
determining the frequency selective fading degree value on the target PRB based on the downlink CSI.

In an embodiment, determining the first DMRS pattern set based on the frequency selective fading degree value on the target PRB includes:
determining a value interval to which the frequency selective fading degree value on the target PRB belongs; and
determining the first DMRS pattern set based on the value interval and a target mapping relationship table, where the target mapping relationship table includes a one-to-one mapping relationship between the value interval to which the frequency selective fading degree value belongs and a DMRS pattern set.

In an embodiment, DMRS patterns in different DMRS pattern sets correspond to different densities of DMRS, and DMRS patterns in the same DMRS pattern set correspond to the same density of DMRS.

In an embodiment, a larger frequency selective fading degree value corresponds to a larger density of DMRS, and a smaller frequency selective fading degree value corresponds to a smaller density of DMRS.

In an embodiment, a density of DMRS represents a number of resource elements (REs) occupied when transmitting the DMRS on one orthogonal frequency division multiplexing (OFDM) symbol of one PRB.

In an embodiment, transmitting the DMRS on the target PRB based on the first DMRS pattern set includes:
selecting a target DMRS pattern from the first DMRS pattern set; and
transmitting the DMRS on the target PRB based on the target DMRS pattern.

In an embodiment, transmitting the DMRS on the target PRB based on the first DMRS pattern set includes:
transmitting first information to the network device, where the first information is used to indicate the first DMRS pattern set;
receiving second information transmitted from the network device, where the second information is used to indicate a target DMRS pattern, the target DMRS pattern is selected from the first DMRS pattern set by the network device after receiving the first information; and
transmitting the DMRS on the target PRB based on the target DMRS pattern.

In an embodiment, the operations further include:
indicating, to the network device, a repeated transmission position for repeatedly transmitting the DMRS on a time domain of the target PRB.

In an embodiment, transmitting the DMRS on the target PRB based on the first DMRS pattern set includes:
transmitting the DMRS on the target PRB based on the first DMRS pattern set and states of DMRS patterns in different DMRS pattern sets being used currently.

In an embodiment, the operations further include:
receiving third information transmitted from the network device, where the third information is used to indicate the states of DMRS patterns in different DMRS pattern sets being used currently.

In an embodiment, transmitting the DMRS on the target PRB based on the first DMRS pattern set and the states of DMRS patterns in different DMRS pattern sets being used currently includes:
selecting a second DMRS pattern set in case that a state of DMRS patterns in the first DMRS pattern set being used currently is a crowded state, where a density of DMRS corresponding to DMRS patterns in the second DMRS pattern set is larger than a density of DMRS corresponding to DMRS patterns in the first DMRS pattern set; and
transmitting the DMRS on the target PRB based on the second DMRS pattern set.

In an embodiment, transmitting the DMRS on the target PRB based on the first DMRS pattern set and the states of DMRS patterns in different DMRS pattern sets being used currently includes:
selecting a third DMRS pattern set in case that a state of DMRS patterns in the first DMRS pattern set being used currently is a crowded state and there is no second DMRS pattern set, where a density of DMRS corresponding to DMRS patterns in the second DMRS pattern set is larger than a density of DMRS corresponding to DMRS patterns in the first DMRS pattern set, and a density of DMRS corresponding to DMRS patterns in the third DMRS pattern set is smaller than the density of the DMRS corresponding to DMRS patterns in the first DMRS pattern set; and
transmitting the DMRS on the target PRB based on the third DMRS pattern set.

An embodiment of the present application further provides a network device, including a memory, a transceiver and a processor,
where the memory is used to store a computer program, the transceiver is used to transmit and receive data under control of the processor, and the processor is used to read the computer program in the memory and perform operations of:
transmitting downlink channel state information (CSI) on a target physical resource block (PRB), where the downlink CSI is used to determine a frequency selective fading degree value on the target PRB, and the frequency selective fading degree value is used to determine a first demodulation reference signal (DMRS) pattern set; and
receiving a DMRS, where the DMRS is transmitted from a terminal on the target PRB based on the first DMRS pattern set.

In an embodiment, receiving the DMRS includes:
determining a target DMRS pattern, where the target DMRS pattern is a DMRS pattern selected by the terminal from the first DMRS pattern set; and
receiving the DMRS on the target PRB based on the target DMRS pattern.

In an embodiment, receiving the DMRS includes:
receiving first information transmitted from the terminal, where the first information is used to indicate the first DMRS pattern set;
selecting a target DMRS pattern from the first DMRS pattern set;
transmitting second information to the terminal, where the second information is used to indicate the target DMRS pattern; and
receiving the DMRS on the target PRB based on the target DMRS pattern.

In an embodiment, receiving the DMRS includes:
determining, by the terminal, a repeated transmission position for repeatedly transmitting the DMRS on a time domain of the target PRB; and
receiving the DMRS on the target PRB based on the repeated transmission position.

In an embodiment, the operations further include:
transmitting third information to the terminal, where the third information is used to indicate states of DMRS patterns in different DMRS pattern sets being used currently.

In an embodiment, receiving the DMRS includes:
receiving the DMRS in case that a state of DMRS patterns in the first DMRS pattern set being used currently is a crowded state, where the DMRS is transmitted from the terminal on the target PRB based on a second DMRS pattern set, and a density of DMRS corresponding to DMRS patterns in the second DMRS pattern set is larger than a density of DMRS corresponding to DMRS patterns in the first DMRS pattern set.

In an embodiment, receiving the DMRS includes:
in case that state of DMRS patterns in the first DMRS pattern set being used currently is a crowded state and there is no second DMRS pattern set, receiving the DMRS, where the DMRS is transmitted from the terminal on the target PRB based on a third DMRS pattern set, a density of DMRS corresponding to DMRS patterns in the second DMRS pattern set is larger than a density of DMRS corresponding to DMRS patterns in the first DMRS pattern set, and a density of DMRS corresponding to DMRS patterns in the third DMRS pattern set is smaller than the density of the DMRS corresponding to DMRS patterns in the first DMRS pattern set.

An embodiment of the present application further provides an apparatus for transmitting a demodulation reference signal (DMRS), including:
a determining module, used for determining a first DMRS pattern set based on a frequency selective fading degree value on a target physical resource block (PRB); and
a first transmitting module, used for transmitting the DMRS on the target PRB based on the first DMRS pattern set.

In an embodiment, the apparatus further includes a third transmitting module and a first determining module,
where the third transmitting module is used for receiving downlink channel state information (CSI) transmitted from a network device on the target PRB; and
the first determining module is used for determining the frequency selective fading degree value on the target PRB based on the downlink CSI.

In an embodiment, the determining module includes a first determining sub-module and a second determining sub-module,
where the first determining sub-module is used for determining a value interval to which the frequency selective fading degree value on the target PRB belongs; and
the second determining sub-module is used for determining the first DMRS pattern set based on the value interval and a target mapping relationship table, where the target mapping relationship table includes a one-to-one mapping relationship between the value interval to which the frequency selective fading degree value belongs and DMRS pattern sets.

In an embodiment, DMRS patterns in different DMRS pattern sets correspond to have different densities of DMRS, and DMRS patterns in the same DMRS pattern set correspond to the same density of DMRS.

In an embodiment, a larger frequency selective fading degree value corresponds to a larger density of DMRS, and a smaller frequency selective fading degree value corresponds to a smaller density of DMRS.

In an embodiment, a density of DMRS represents a number of resource elements (REs) occupied when transmitting the DMRS on one orthogonal frequency division multiplexing (OFDM) symbol of one PRB.

In an embodiment, the first transmitting module includes a first selecting sub-module and a first transmitting sub-module,
where the first selecting sub-module is used for selecting a target DMRS pattern from the first DMRS pattern set; and
the first transmitting sub-module is used for transmitting the DMRS on the target PRB based on the target DMRS pattern.

In an embodiment, the first transmitting module includes a second transmitting sub-module, a first receiving sub-module and a third transmitting sub-module,
where the second transmitting sub-module is used for transmitting first information to the network device, where the first information is used to indicate the first DMRS pattern set;
the first receiving sub-module is used for receiving second information transmitted from the network device, where the second information is used to indicate a target DMRS pattern, the target DMRS pattern is selected from the first DMRS pattern set by the network device after receiving the first information; and
the third transmitting sub-module is used for transmitting the DMRS on the target PRB based on the target DMRS pattern.

In an embodiment, the apparatus further includes a first indicating module,
where the first indicating module is used for indicating, to the network device, a repeated transmission position for repeatedly transmitting the DMRS on a time domain of the target PRB.

In an embodiment, the first transmitting module is used for:
transmitting the DMRS on the target PRB based on the first DMRS pattern set and states of DMRS patterns in different DMRS pattern sets being used currently.

In an embodiment, the apparatus further includes a second receiving module,
where the second receiving module is used for receiving third information transmitted from the network device, where the third information is used to indicate the states of DMRS patterns in different DMRS pattern sets being used currently.

In an embodiment, the first transmitting module includes a second selecting sub-module and a fourth transmitting sub-module,
where the second selecting sub-module is used for selecting a second DMRS pattern set in case that a state of DMRS patterns in the first DMRS pattern set being used currently is a crowded state, where a density of DMRS corresponding to DMRS patterns in the second DMRS pattern set is larger than a density of DMRS corresponding to DMRS patterns in the first DMRS pattern set; and
the fourth transmitting sub-module is used for transmitting the DMRS on the target PRB based on the second DMRS pattern set.

In an embodiment, the first transmitting module includes a third selecting sub-module and a fifth transmitting sub-module,
where the third selecting sub-module is used for selecting a third DMRS pattern set in case that a state of DMRS patterns in the first DMRS pattern set being used currently is a crowded state and there is no second DMRS pattern set, where a density of DMRS corresponding to DMRS patterns in the second DMRS pattern set is larger than a density of DMRS corresponding to DMRS patterns in the first DMRS pattern set, and a density of DMRS corresponding to DMRS patterns in the third DMRS pattern set is smaller than the density of the DMRS corresponding to DMRS patterns in the first DMRS pattern set; and
the fifth transmitting sub-module is used for transmitting the DMRS on the target PRB based on the third DMRS pattern set.

An embodiment of the present application further provides an apparatus for transmitting a demodulation reference signal (DMRS), including:
a second transmitting module, used for transmitting downlink channel state information (CSI) on a target physical resource block (PRB), where the downlink CSI is used to determine a frequency selective fading degree value on the target PRB, and the frequency selective fading degree value is used to determine a first DMRS pattern set; and
a receiving module, used for receiving the DMRS, where the DMRS is transmitted from a terminal on the target PRB based on the first DMRS pattern set.

In an embodiment, the receiving module includes a third receiving sub-module, a fourth selecting sub-module, a sixth transmitting sub-module and a fourth receiving sub-module,
where the third receiving sub-module is used for receiving first information transmitted from the terminal, where the first information is used to indicate the first DMRS pattern set;
the fourth selecting sub-module is used for selecting a target DMRS pattern from the first DMRS pattern set;
the sixth transmitting sub-module is used for transmitting second information to the terminal, where the second information is used to indicate the target DMRS pattern; and
the fourth receiving sub-module is used for receiving the DMRS on the target PRB based on the target DMRS pattern.

In an embodiment, the receiving module includes a fourth determining sub-module and a fifth receiving sub-module,
where the fourth determining sub-module is used for determining, by the terminal, a repeated transmission position for repeatedly transmitting the DMRS on a time domain of the target PRB; and
the fifth receiving sub-module is used for receiving the DMRS on the target PRB based on the repeated transmission position.

In an embodiment, the apparatus further includes a third transmitting module,
where the third transmitting module is used for transmitting third information to the terminal, where the third information is used to indicate states of DMRS patterns in different DMRS pattern sets being used currently.

In an embodiment, the receiving module is used for:
receiving the DMRS in case that a state of DMRS patterns in the first DMRS pattern set being used currently is a crowded state, where the DMRS is transmitted from the terminal on the target PRB based on a second DMRS pattern set, and a density of DMRS corresponding to DMRS patterns in the second DMRS pattern set is larger than a density of DMRS corresponding to DMRS patterns in the first DMRS pattern set.

In an embodiment, the receiving module is used for:
receiving the DMRS in case that a state of DMRS patterns in the first DMRS pattern set being used currently is a crowded state and there is no second DMRS pattern set, where the DMRS is transmitted from the terminal on the target PRB based on a third DMRS pattern set, a density of DMRS corresponding to DMRS patterns in the second DMRS pattern set is larger than a density of DMRS corresponding to DMRS patterns in the first DMRS pattern set, and a density of DMRS corresponding to DMRS patterns in the third DMRS pattern set is smaller than the density of the DMRS corresponding to DMRS patterns in the first DMRS pattern set.

An embodiment of the present application further provides a processor-readable storage medium having a computer program stored thereon, where the computer program is used to cause a processor to perform steps of the methods for transmitting the DMRS described above.

An embodiment of the present application further provides a computer-readable storage medium having a computer program stored thereon, where the computer program is used to cause a computer to perform steps of the methods for transmitting the DMRS described above.

An embodiment of the present application further provides a communication device-readable storage medium having a computer program stored thereon, where the computer program is used to cause a communication device to perform steps of the methods for transmitting the DMRS described above.

An embodiment of the present application further provides a chip product-readable storage medium having a computer program stored thereon, where the computer program is used to cause a chip product to perform steps of the methods for transmitting the DMRS described above.

In the methods and apparatuses for transmitting the DMRS, and storage mediums provided by the embodiments of the present application, the DMRS pattern set is determined based on the frequency selective fading degree value on the PRB, and the DMRS is transmitted on the PRB by the terminal/user equipment (UE) based on the DMRS pattern set, which reduces the possibility of pilot collision and improves the accuracy of channel estimation.

### BRIEF DESCRIPTION OF THE DRAWINGS

In order to more clearly illustrate solutions disclosed in the embodiments of the present application, the drawings used in the descriptions of the embodiments will be briefly described below. The drawings in the following description are only certain embodiments of the present application, and other drawings may be obtained according to these drawings without any creative work for those skilled in the art.
FIG. 1 is a first schematic diagram of a mode for multiplexing and configuring demodulation reference signal (DMRS);
FIG. 2 is a second schematic diagram of a mode for multiplexing and configuring DMRS;
FIG. 3 is a first schematic flowchart of a method for transmitting a DMRS according to an embodiment of the present application;
FIG. 4 is a first schematic diagram of a DMRS pattern according to an embodiment of the present application;
FIG. 5 is a second schematic diagram of a DMRS pattern according to an embodiment of the present application;
FIG. 6 is a second schematic flowchart of a method for transmitting a DMRS according to an embodiment of the present application;
FIG. 7 is a schematic structural diagram of a terminal according to an embodiment of the present application;
FIG. 8 is a schematic structural diagram of a network device according to an embodiment of the present application;
FIG. 9 is a first schematic structural diagram of an apparatus for transmitting a DMRS according to an embodiment of the present application; and
FIG. 10 is a second schematic structural diagram of an apparatus for transmitting a DMRS according to an embodiment of the present application.

### DETAILED DESCRIPTION

Front-end design concept is used for demodulation reference signal (DMRS) of a data channel in new radio (NR). In each scheduling time unit, a position where the DMRS firstly appears should be as close as possible to a starting point for scheduling.

DMRS ports of NR are multiplexed by adopting frequency division multiplexing (FDM) and code division multiplexing (CDM). Each CDM group is divided into multiple ports through an orthogonal cover code (OCC), and CDM groups are distinguished by adopting FDM.

Two types of DMRS are supported in NR, and the used type of DMRS is configured through higher layer signaling. DMRS may include one OFDM symbol (single-symbol DMRS) or two OFDM symbols (double-symbol DMRS).

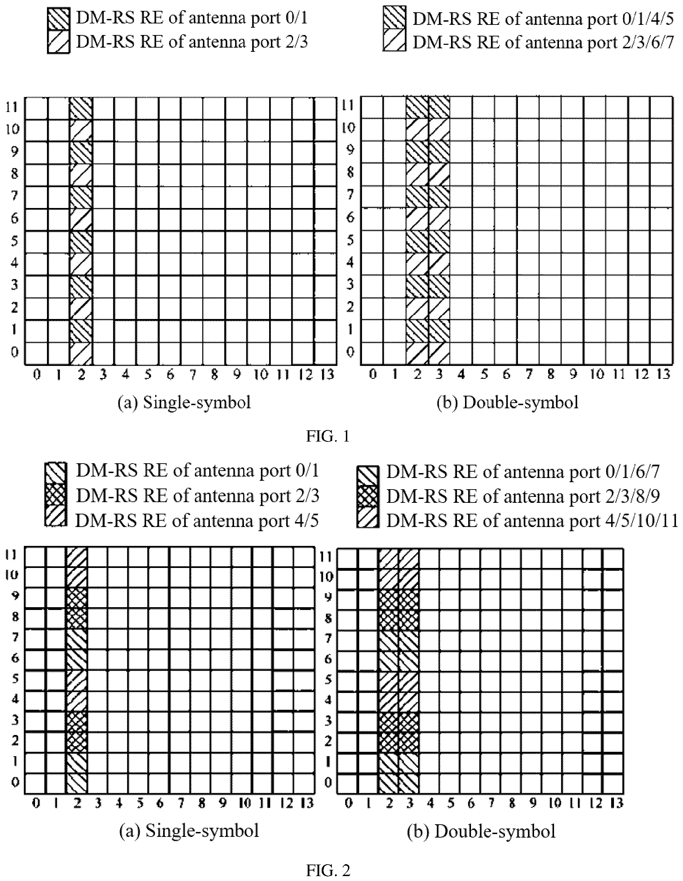

FIG. 1 is a first schematic diagram of a mode for multiplexing and configuring a DMRS. As shown in FIG. 1, for single-symbol DMRS, subcarriers within an OFDM symbol are divided into two groups of frequency division comb resources. Each group of comb resources forms one CDM group. Multiplexing of two ports is supported within a CDM group through two OCCs, and up to four ports are supported. For double-symbol DMRS, time domain OCCs are added on the basis of a single-symbol structure. Each group of comb resources occupies two consecutive OFDM symbols. Each CDM group supports four orthogonal ports through four time-frequency domain OCCs, so up to eight orthogonal ports may be supported.

FIG. 2 is a second schematic diagram of a mode for multiplexing and configuring a DMRS. As shown in FIG. 2, for single-symbol DMRS, subcarriers within an OFDM symbol are divided into three CDM groups, and each CDM group is composed of two pairs of adjacent two subcarriers. Multiplexing of two ports is supported within a CDM group through two OCCs, and FDM is performed between CDM groups, so up to six ports are supported. For double-symbol DMRS, time domain OCCs are added on the basis of a single-symbol structure. Each CDM group occupies two consecutive OFDM symbols. Each CDM group supports four orthogonal ports through four time-frequency domain OCCs, and up to twelve orthogonal ports may be supported in three CDM groups.

In addition, in a high-speed mobile scenario, more DMRS need to be inserted within a scheduling duration to ensure the estimation of time-varying channels. A structure that combines front-end DMRS with additional DMRS having configurable time domain density is used in an NR system. Patterns of each group of additional DMRS are repetitions of the front-end DMRS. Therefore, consistent with the front-end DMRS, each group of additional DMRS may occupy up to two consecutive OFDM symbols. Based on a specific usage scenario and mobility, up to three additional DMRS groups may be configured. The number of additional DMRS depends on a high-level parameter configuration and a specific scheduling duration.

A current mode for allocating DMRS allocation is to allocate orthogonal time-frequency resources to different users. Since allocable time-frequency resources are limited, the number of active user equipments (UEs) accessing the network may be limited. Facing a scenario of massive UEs in 6G, serious pilot collisions will inevitably occur, thus affecting an accuracy of channel estimation.

Based on the above problems, embodiments of the present application provide methods and apparatuses for transmitting demodulation reference signal (DMRS), and storage mediums. A DMRS pattern set is determined based on a frequency selective fading degree value on a target physical resource block (PRB), the UE transmits the DMRS on the PRB based on the DMRS pattern set, which reduces the possibility of pilot collision and improves the accuracy of channel estimation.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

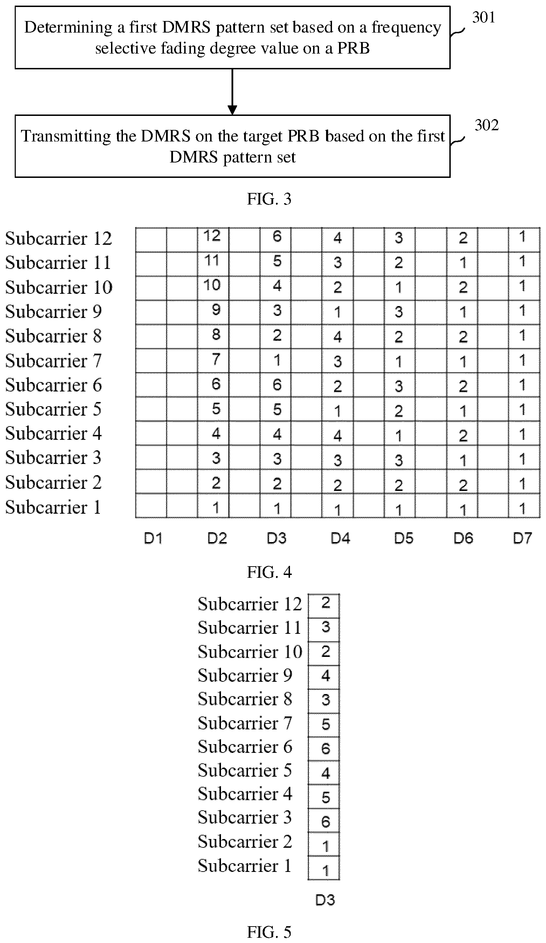

FIG. 3 is a first schematic flowchart of a method for transmitting a DMRS according to an embodiment of the present application. As shown in FIG. 3, an embodiment of the present application provides a method for transmitting a DMRS, which can be performed by a UE, such as a mobile phone. The method includes the following steps.

Step 301: determining a first DMRS pattern set based on a frequency selective fading degree value on a PRB.

The UE firstly determines a preamble sequence, completes coding modulation and resource mapping on service data bits, and then transmits the preamble sequence and the service data on resources configured by a network device, respectively.

When performing the DMRS resource mapping, the UE obtains frequency domain selective fading information on the target PRB through downlink channel state information (CSI) by using channel reciprocity. That is, before determining the first DMRS pattern set based on the frequency selective fading degree value on the target PRB, the UE also needs to determine the frequency selective fading degree value on the target PRB.

Specific steps for the UE to determine the frequency selective fading degree value on the target PRB are as follows.

First, the network device transmits downlink CSI on the target PRB.

The UE receives the CSI transmitted from the network device on the target PRB.

Then, the UE determines the frequency selective fading degree value on the target PRB based on the CSI.

In an embodiment, the frequency selective fading degree value is used to measure the frequency selective fading degree. The larger the frequency selective fading degree value, the more serious the frequency selective fading degree. The smaller the frequency selective fading degree value, the weaker the frequency selective fading degree.

The UE may obtain a frequency selective fading degree value on one PRB by receiving CSI for one time. It may also obtain frequency selective fading degree values on multiple PRBs by receiving CSI for one time. It may also obtain frequency selective fading degree values on one PRB group by receiving CSI for one time. It may also obtain frequency selective fading degree values on multiple PRB groups by receiving CSI for one time.

In an embodiment, the UE takes a variance value of a signal when receiving the CSI as the frequency selective fading degree value, and uses the variance value of the signal when receiving the CSI to measure the frequency selective fading degree value.

In an embodiment, the UE uses a fading depth of the signal when receiving the CSI as the frequency selective fading degree value, and uses the fading depth of the signal when receiving the CSI to measure the frequency selective fading degree value. Fading depth is a degree of change in amplitude fading which is one of the fading characteristics. A signal level is below decibels of a median value. That is, a difference between an instantaneous value and the median value of the signal level, or a difference in decibels between levels with distribution probabilities of 50% and 10% respectively.

In an embodiment, determining the first DMRS pattern set based on the frequency selective fading degree value on the target PRB includes the following specific steps.

First, the UE determines a value interval to which the frequency selective fading degree value on the target PRB belongs.

The value range of the frequency selective fading degree value is divided into several intervals in advance. After the frequency selective fading degree value on the target PRB is determined, a corresponding value interval may be determined based on the frequency selective fading degree value.

For example, the value range of the frequency selective fading degree value is [0,100], which is divided into two intervals: [0, 50] and (50, 100]. If the frequency selective fading degree value obtained by the UE is 30, it may be determined that a corresponding value interval of the frequency selective fading degree value `30' is [0, 50]. If the frequency selective fading degree value obtained by the UE is 78, it may be determined that a corresponding value interval of the frequency selective fading degree value '78' is (50, 100].

Then, the UE determines the first DMRS pattern set based on the value interval and a target mapping relationship table. The target mapping relationship table includes a one-to-one mapping relationship between the value interval of the frequency selective fading degree value and a DMRS pattern set.

The target mapping relationship table may be predefined through a protocol, or may be configured by the network device for the UE.

For example, the value range of the frequency selective fading degree value is [0,100], which is divided into two value intervals: [0, 50] and (50, 100]. The two value intervals are included in the mapping relationship table: the value interval [0, 50] is in one-to-one correspondence with a DMRS pattern set D2, and the value interval (50, 1001 is in one-to-one correspondence with a DMRS pattern set D3. If the frequency selective fading degree value obtained by the UE is 30, it may be determined that the value interval corresponding to the frequency selective fading degree value `30' is [0,50], and then the DMRS pattern set D2 may be determined through the mapping relationship table. If the frequency selective fading degree value obtained by the UE is 78, it may be determined that the value interval corresponding to the frequency selective fading degree value '78' is (50,100], and then the DMRS pattern set D3 may be determined through the mapping relationship table.

In an embodiment, DMRS patterns in different DMRS pattern sets correspond to different densities of DMRS, and DMRS patterns in the same DMRS pattern set correspond to the same density of DMRS.

In an embodiment, a larger frequency selective fading degree value corresponds to a larger density of DMRS, and a smaller frequency selective fading degree value corresponds to a smaller density of DMRS.

In an embodiment, a density of DMRS represents a number of resource elements (REs) occupied when transmitting the DMRS on one orthogonal frequency division multiplexing (OFDM) symbol of one PRB.

In an embodiment, FIG. 4 is a first schematic diagram of a DMRS pattern according to an embodiment of the present application. As shown in FIG. 4, a horizontal direction represents a type of a density of DMRS corresponding to a DMRS pattern, which is only illustrated by one OFDM symbol, a vertical direction represents twelve subcarriers in a frequency domain, and numberings in boxes represent numberings of UEs. D1-D7 represent seven DMRS pattern sets with different DMRS densities respectively. Specifically, a density of DMRS corresponding to a DMRS pattern in D1 is expressed as ORE/PRB (that is, no DMRS is transmitted), a density of DMRS corresponding to a DMRS pattern in D2 is expressed as 1RE/PRB, a density of DMRS corresponding to a DMRS pattern in D3 is expressed as 2RE/PRB, a density of DMRS corresponding to a DMRS pattern in D4 is expressed as 3RE/PRB, a density of DMRS corresponding to a DMRS pattern in D5 is expressed as 4RE/PRB, a density of DMRS corresponding to a DMRS pattern in D6 is expressed as 6RE/PRB, and a density of DMRS corresponding to a DMRS pattern in D7 is expressed as 12RE/PRB. Same numbers in the frequency domain represents same CDM groups, that is, a RE position selected for the DMRS transmitted from one UE in the frequency domain.

It should be noted that the DMRS patterns in different DMRS pattern sets means that DMRS occupies REs having different numbers and different positions on each PRB. For example, D2 represents a DMRS pattern set with a corresponding DMRS density of 1RE/PRB, that is, one UE occupies one RE when transmitting the DMRS on each PRB. Based on a principle of permutation and combination, there may be up to C_12^1 DMRS patterns for distribution selection options in D2.

In addition, it should be noted that FIG. 4 only shows a typical DMRS pattern of a density of DMRS. In fact, RE distribution in the frequency domain may be random and diverse, thereby supporting more users. For example, the density of DMRS corresponding to the DMRS pattern in D3 is 2RE/PRB, that is, two REs are occupied when one UE transmits the DMRS on each PRB, and two REs may be arbitrarily selected from twelve candidate positions. Based on the principle of permutation and combination, there may be up to C_12^2 DMRS patterns for distribution selection options in D3. Based on one DMRS pattern in D3 shown in FIG. 4, it may be determined that the UE numbered as 1 occupies two REs, i.e., subcarrier 1 and subcarrier 7 in the frequency domain, to transmit the DMRS. FIG. 5 is a second schematic diagram of a DMRS pattern according to an embodiment of the present application. As shown in FIG. 5, based on another DMRS pattern in D3 shown in FIG. 5, it may be determined that the UE numbered as 1 occupies two REs, i.e., subcarrier 1 and subcarrier 2 in the frequency domain, to transmit the DMRS.

Step 302: transmitting the DMRS on the target PRB based on the first DMRS pattern set.

In an embodiment, after determining the first DMRS pattern set, the UE transmits the DMRS on the target PRB based on the first DMRS pattern set.

The network device receives the DMRS transmitted by the UE, and completes channel estimation and data detection based on the DMRS.

In an embodiment, the target DMRS pattern is selected by the UE from the first DMRS pattern set.

Specific steps for transmitting the DMRS on the target PRB based on the first DMRS pattern set are as follows.

First, the UE selects a target DMRS pattern from the first DMRS pattern set.

In an embodiment, the UE may randomly select a DMRS pattern from the first DMRS pattern set and determine it as the target DMRS pattern.

For example, based on the above example, the DMRS pattern set D3 includes one DMRS pattern shown in FIG. 4 and another DMRS pattern shown in FIG. 5. The UE randomly selects one of the two DMRS patterns and determine it as the target DMRS pattern.

In an embodiment, the UE may select the target DMRS pattern from the first DMRS pattern set in sequence. The DMRS patterns in the first DMRS pattern set may be numbered in sequence, and the numbering of the target DMRS pattern is associated with the target PRB, or the numbering of the target DMRS pattern is associated with a transmission period of the DMRS.

For example, based on the above example, the DMRS pattern set D3 includes one DMRS pattern (which is numbered as 1) shown in FIG. 4 and another DMRS pattern (which is numbered as 2) shown in FIG. 5. When the UE transmits the DMRS on PRB1, the DMRS pattern (which is numbered as 1) shown in FIG. 4 is selected, and when the UE transmits the DMRS on PRB2, the DMRS pattern (which is numbered as 2) shown in FIG. 5 is selected.

Then, after determining the target DMRS pattern, the UE transmits the DMRS on the target PRB based on the target DMRS pattern.

For example, based on the above example, the UE selects the DMRS pattern shown in FIG. 5, and the UE occupies two REs, i.e., subcarrier 1 and subcarrier 2 in the frequency domain, based on the DMRS pattern shown in FIG. 5 to transmit the DMRS.

In addition, the UE may also indicate the selected target DMRS pattern to the network device, which may be indicated in an explicit manner, for example, by directly transmitting a name, a numbering or an identifier of the target DMRS pattern to the network device, or may also be indicated in an invisible manner. For example, if the network device receives the DMRS pattern 1 indicated by the UE within a preset time period, it is determined that the UE indicates DMRS pattern 2.

After receiving the target DMRS pattern indicated by the UE, the network device receives the DMRS on the target PRB based on the target DMRS pattern.

If the UE does not indicate the selected target DMRS pattern to the network device, the network device receives the DMRS on the target PRB through blind detection.

In an embodiment, the network device may also select the target DMRS pattern from the first DMRS pattern set.

Specific steps for transmitting the DMRS on the target PRB based on the first DMRS pattern set are as follows.

Firstly, the UE transmits first information to the network device, and the first information is used to indicate the first DMRS pattern set.

The network device receives the first information transmitted by the UE, and selects a target DMRS pattern from the first DMRS pattern set.

After selecting the target DMRS pattern, the network device transmits second information to the UE. The second information is used to indicate the target DMRS pattern.

The specific manner for the network device selecting the target DMRS pattern may refer to the specific manner for the UE selecting the target DMRS pattern, and will not be repeated here.

Then, the UE receives the second information transmitted by the network device, and transmits the DMRS on the target PRB based on the target DMRS pattern.

Specific steps for the UE transmitting the DMRS on the target PRB based on the target DMRS pattern are the same as those in the above embodiment, and will not be repeated here.

After transmitting the second information to the UE, the network device receives the DMRS on the target PRB based on the target DMRS pattern selected by itself.

In the method for transmitting the DMRS provided by the embodiments of the present application, the DMRS pattern set is determined based on the frequency selective fading degree value on the PRB, and the DMRS is transmitted on the PRB by the UE based on the DMRS pattern set, which reduces the possibility of pilot collision and improves the accuracy of channel estimation.

In an embodiment, the method further includes:
indicating, to the network device, a repeated transmission position for repeatedly transmitting the DMRS on a time domain of the target PRB.

In an embodiment of the present application, the UE may select the repeated transmission position for repeatedly transmitting the DMRS on the time domain of the target PRB by using a coded slotted ALOHA (CSA) mode, to avoid a collision problem caused by the similar channel states of multiple users as much as possible.

The UE indicates the repeated transmission position for repeatedly transmitting the DMRS on the time domain of the target PRB to the network device. The UE may indicate to the network device in an explicit indication manner or an implicit indication manner, which may be specifically referred to the above embodiment, and will not be described in detail here.

The network device determines the repeated transmission position for the UE repeatedly transmitting the DMRS on the time domain of the target PRB, and receives the DMRS on the target PRB based on the repeated transmission position.

In an embodiment, auxiliary information may also be broadcasted periodically by the base station to avoid a collision problem caused by the similar channel states of multiple users as much as possible.

The network device transmits third information (auxiliary information) to the UE. The third information is used to indicate states of DMRS patterns in different DMRS pattern sets being used currently.

The UE receives the third information transmitted by the network device, and transmits the DMRS on the target PRB based on the first DMRS pattern set and the states of DMRS patterns in different DMRS pattern sets being used currently.

In an embodiment, specific steps for transmitting the DMRS on the target PRB based on the first DMRS pattern set and the states of DMRS patterns in different DMRS pattern sets being used currently are as follows.

Firstly, the UE determines whether a state of DMRS patterns in the first DMRS pattern set indicated by the network device being used currently is a crowded state. If the state of DMRS patterns in the first DMRS pattern set being used currently is a crowded state, a second DMRS pattern set is selected. A density of DMRS corresponding to DMRS patterns in the second DMRS pattern set is larger than a density of DMRS corresponding to DMRS patterns in the first DMRS pattern set.

The UE may periodically receive broadcast information from network device to obtain the current congestion state Zn of each channel (that is, a state of DMRS patterns in each DMRS pattern set with a respective density), n represents n-bit binary number and corresponds to n DMRS density sets, where 0 represents idle state, and 1 represents crowded state). The UE may generate a corresponding DMRS pattern based on the DMRS set numbering Yn determined by the current frequency selective fading degree value on the target PRB and the current congestion state Zn of each channel. The state of DMRS patterns in the DMRS pattern set D_Yn being used currently is determined. If it is idle, one pattern is still randomly selected in D_Yn. If it is crowded, an idle DMRS set is firstly searched for in a direction of increasing Yn, and one pattern is randomly selected from a DMRS set being firstly found.

For example, Zn=0010111 (as shown in FIG. 4, a 7-bit binary number is taken as an example, corresponding to seven DMRS density sets, where 0 represents idle state, 1 represents crowded state, and the density of DMRS gradually increases in D1-D7) indicates that D3, D5, D6 and D7 are in crowded, and the rest sets are in idle.

Yn=2 means that the UE has selected D2. Since D2 is in idle at this time, the UE may directly randomly select one DMRS pattern from D2.

Yn=3 means that the UE has selected D3. Since D3 is in crowded at this time, the UE firstly determines congestion state of D4, D5, D6 and D7 in the direction of increasing Yn. The idle set being firstly found is D4, and the UE randomly selects one DMRS pattern from D4.

Then, the UE transmits the DMRS on the target PRB based on the second DMRS pattern set.

Specific steps for the UE transmitting the DMRS on the target PRB based on the second DMRS pattern set may be referred to the specific steps for the UE transmitting the DMRS on the target PRB based on the first DMRS pattern set in the above embodiment, and will not be repeated here.

Correspondingly, the network device determines the second DMRS pattern set in the same mode as the UE, and receives the DMRS on the target PRB based on the second DMRS pattern set, which will not be repeated here.

It should also be noted that if the state of DMRS patterns in the first DMRS pattern sets being used currently is an idle state, the UE or the network device may directly select the target DMRS pattern from the first DMRS pattern set. Specific steps may be referred to the above embodiment and will not be repeated here.

In an embodiment of the present application, the base station periodically broadcasts the auxiliary information to avoid a collision problem caused by the similar channel states of multiple users as much as possible.

In an embodiment, specific steps for transmitting the DMRS on the target PRB based on the first DMRS pattern set and the states of the DMRS patterns in different DMRS pattern sets being used currently are as follows:

First, the UE determines whether the state of DMRS patterns in the first DMRS pattern set indicated by the network device being used currently is a crowded state. If the state of DMRS patterns in the first DMRS pattern set being used currently is a crowded state and there is no second DMRS pattern set, the third DMRS pattern set is selected. A density of DMRS corresponding to DMRS patterns in the second DMRS pattern set is larger than a density of DMRS corresponding to DMRS patterns in the first DMRS pattern set, and a density of DMRS corresponding to DMRS patterns in the third DMRS pattern set is smaller than the density of the DMRS corresponding to DMRS patterns in the first DMRS pattern set.

The UE may periodically receive broadcast information from network device to obtain the current congestion state Zn of each channel. The UE may generate a corresponding DMRS pattern based on the DMRS set numbering Yn determined by the current frequency selective fading degree value on the target PRB and the current congestion state Zn of each channel. The state of DMRS patterns in the current DMRS pattern set D_Yn being used is determined. If it is idle, one pattern is still randomly selected from D_Yn. If it is crowded, an idle DMRS set is firstly searched for in a direction of increasing Yn, and one pattern is randomly selected from a DMRS set being firstly found. If no idle DMRS set is found in this direction, an idle DMRS set is then searched for in a direction of decreasing Yn (up to q times, where q is a preset value). If no idle DMRS set is found, one pattern is still randomly selected from D_Yn.

For example, Zn=0010111 (a 7-bit binary number is taken as an example, corresponding to seven DMRS density sets, where 0 represents idle state, 1 represents crowded state) indicates that D3, D5, D6 and D7 are in crowded, and the rest sets are in idle; and q=2 indicates that the number of searching is at most 2 in the direction of decreasing Yn.

Yn=2 means that the UE has selected D2. Since D2 is in idle at this time, the UE may directly randomly select one DMRS pattern from D2.

Yn=6 means that the UE has selected D6. Since D6 is in crowded at this time, the UE firstly determines D7 in the direction of increasing Yn, and no idle set is found. D5 and D4 are then determined in sequence in the direction of decreasing Yn. The idle set being firstly found is D4, and the UE may randomly select one DMRS pattern from D4.

Yn=7 means that the terminal has selected D7. At this time, the searching may only be performed in the direction of decreasing Yn (up to 2 times). D6 and D5 are determined in sequence, and no idle set is found, so the UE still selects one DMRS pattern from D7.

Then, the UE transmits the DMRS on the target PRB based on the third DMRS pattern set.

Specific steps for the UE transmitting the DMRS on the target PRB based on the third DMRS pattern set may be referred to the specific steps for the UE transmitting the DMRS on the target PRB based on the first DMRS pattern set in the above embodiment, and will not be repeated here.

Accordingly, the network device determines the third DMRS pattern set in the same mode as the UE, and receives the DMRS on the target PRB based on the third DMRS pattern set, which will not be repeated here.

It should be noted that: in case of severe frequency domain selective fading, DMRS with a higher density is required, so it is necessary to firstly perform searching in the direction of increasing Yn, that is, a direction of increasing DMRS density, to ensure that a performance of the DMRS will not be reduced as much as possible. Then the search is performed in the direction of decreasing Yn, that is, a direction of decreasing DMRS density. At this time, the performance of the DMRS will be affected by the decrease in density, so a q value needs to be set in advance to control its influence degree. For example, in case of Zn=0111111 and Yn=7, although D1 is in idle, the density is reduced too much, resulting in poor performance of the DMRS. Therefore, q is required to control searching in the direction of decreasing density being up to q times, to ensure the performance of the DMRS not being reduced as much as possible.

In an embodiment of the present application, the base station periodically broadcasts the auxiliary information to avoid a collision problem caused by the similar channel states of multiple users as much as possible.

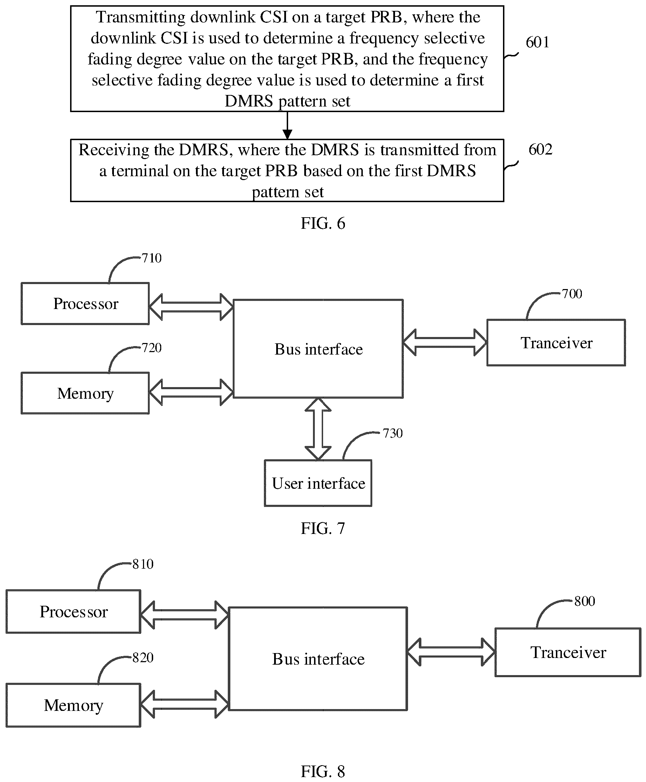

FIG. 6 is a second schematic flowchart of a method for transmitting a DMRS according to an embodiment of the present application. As shown in FIG. 6, an embodiment of the present application further provides a method for transmitting a DMRS, which may be performed by a network device, such as a base station. The method includes the following steps.

Step 601: transmitting downlink CSI on a target PRB, where the downlink CSI is used to determine a frequency selective fading degree value on the target PRB, and the frequency selective fading degree value is used to determine a first DMRS pattern set.

Step 602: receiving the DMRS, where the DMRS is transmitted from a terminal on the target PRB based on the first DMRS pattern set.

In an embodiment, receiving the DMRS includes:
determining a target DMRS pattern, where the target DMRS pattern is a DMRS pattern selected by the terminal from the first DMRS pattern set; and
receiving the DMRS on the target PRB based on the target DMRS pattern.

In an embodiment, receiving the DMRS includes:
receiving first information transmitted from the terminal, where the first information is used to indicate the first DMRS pattern set;
selecting a target DMRS pattern from the first DMRS pattern set;
transmitting second information to the terminal, where the second information is used to indicate the target DMRS pattern; and
receiving the DMRS on the target PRB based on the target DMRS pattern.

In an embodiment, receiving the DMRS includes:
determining, by the terminal, a repeated transmission position for repeatedly transmitting the DMRS on a time domain of the target PRB; and
receiving the DMRS on the target PRB based on the repeated transmission position.

In an embodiment, the method further includes:
transmitting third information to the terminal, where the third information is used to indicate states of DMRS patterns in different DMRS pattern sets being used currently.

In an embodiment, receiving the DMRS includes:
receiving the DMRS in case that a state of DMRS patterns in the first DMRS pattern set being used currently is a crowded state, where the DMRS is transmitted from the terminal on the target PRB based on a second DMRS pattern set, and a density of DMRS corresponding to DMRS patterns in the second DMRS pattern set is larger than a density of DMRS corresponding to DMRS patterns in the first DMRS pattern set.

In an embodiment, receiving the DMRS includes:
receiving the DMRS in case that the state of DMRS patterns in the first DMRS pattern set being used currently is a crowded state and there is no second DMRS pattern set, where the DMRS is transmitted from the terminal on the target PRB based on a third DMRS pattern set, a density of DMRS corresponding to DMRS patterns in the second DMRS pattern set is larger than a density of DMRS corresponding to DMRS patterns in the first DMRS pattern set, and a density of DMRS corresponding to DMRS patterns in the third DMRS pattern set is smaller than the density of the DMRS corresponding to DMRS patterns in the first DMRS pattern set.

In an embodiment, the method for transmitting the DMRS provided by the embodiment of the present application may refer to the above-mentioned method for transmitting the DMRS whose execution subject is the UE, and may achieve the same effect. The same parts and beneficial effects as the same method embodiments are not repeated in the present application.

FIG. 7 is a schematic structural diagram of a terminal according to an embodiment of the present application. As shown in FIG. 7, the terminal includes a memory 720, a transceiver 700 and a processor 710.

The memory 720 is used to store a computer program, the transceiver 700 is used to transmit and receive data under control of the processor 710, and the processor 710 is used to read the computer program in the memory 720 and perform the following operations of:
determining a first demodulation reference signal (DMRS) pattern set based on a frequency selective fading degree value on a target physical resource block (PRB); and
transmitting a DMRS on the target PRB based on the first DMRS pattern set.

In an embodiment, the transceiver 700 is used to receive and transmit data under control of the processor 710.

In FIG. 7, a bus architecture may include any number of interconnected buses and bridges, which are linked together through various circuits of one or more processors represented by the processor 710 and one or more memories represented by the memory 720. The bus architecture may also link together various other circuits, such as peripherals, voltage regulators, and power management circuits, which are well known in the art, and therefore will not be further described in the present application. The bus interface provides an interface. The transceiver 700 may be multiple elements, i.e., including a transmitter and a receiver, units for providing communication with various other devices over transmission media including wireless channels, wired channels, fiber optic cables, and the like. For different user equipment, a user interface 730 may also be an interface capable of externally or internally connecting the required equipment, and the connected equipment includes, but not limited to, a keypad, a display, a speaker, a microphone, a joystick, and the like.

The processor 710 is responsible for managing the bus architecture and general processing, and the memory 720 may store data used by the processor 710 when performing operations.

In an embodiment, the processor 710 may be a central processing unit (CPU), an application specific integrated circuit (ASIC), a field-programmable gate array (FPGA), or a complex programmable logic device (CPLD), the processor can also use a multi-core architecture.

The processor 710 is used for execute any of the methods provided by the embodiments of the present application based on the obtained executable instructions by calling the computer program stored in the memory. The processor and memory may also be physically separated.

In an embodiment, the operations further include:
receiving downlink channel state information (CSI) transmitted from a network device on the target PRB; and
determining the frequency selective fading degree value on the target PRB based on the downlink CSI.

In an embodiment, determining the first DMRS pattern set based on the frequency selective fading degree value on the target PRB includes:
determining a value interval to which the frequency selective fading degree value on the target PRB belongs; and
determining the first DMRS pattern set based on the value interval and a target mapping relationship table, where the target mapping relationship table includes a one-to-one mapping relationships between the value interval of the frequency selective fading degree value and a DMRS pattern set.

In an embodiment, DMRS patterns in different DMRS pattern sets correspond to different densities of DMRS, and DMRS patterns in the same DMRS pattern set correspond to the same density of DMRS.

In an embodiment, a larger frequency selective fading degree value corresponds to a larger density of DMRS, and a smaller frequency selective fading degree value corresponds to a smaller density of DMRS.

In an embodiment, a density of DMRS represents a number of resource elements (REs) occupied when transmitting the DMRS on one orthogonal frequency division multiplexing (OFDM) symbol of one PRB.

In an embodiment, transmitting the DMRS on the target PRB based on the first DMRS pattern set includes:
selecting a target DMRS pattern from the first DMRS pattern set; and
transmitting the DMRS on the target PRB based on the target DMRS pattern.

In an embodiment, transmitting the DMRS on the target PRB based on the first DMRS pattern set includes:
transmitting first information to the network device, where the first information is used to indicate the first DMRS pattern set;
receiving second information transmitted from the network device, where the second information is used to indicate a target DMRS pattern, the target DMRS pattern is selected from the first DMRS pattern set by the network device after receiving the first information; and
transmitting the DMRS on the target PRB based on the target DMRS pattern.

In an embodiment, the operations further include:
indicating, to the network device, a repeated transmission position for repeatedly transmitting the DMRS on a time domain of the target PRB.

In an embodiment, transmitting the DMRS on the target PRB based on the first DMRS pattern set includes:
transmitting the DMRS on the target PRB based on the first DMRS pattern set and states of DMRS patterns in different DMRS pattern sets being used currently.

In an embodiment, the operations further include:
receiving third information transmitted from the network device, where the third information is used to indicate the states of DMRS patterns in different DMRS pattern sets being used currently.

In an embodiment, transmitting the DMRS on the target PRB based on the first DMRS pattern set and the states of DMRS patterns in different DMRS pattern sets being used currently includes:
selecting a second DMRS pattern set in case that a state of DMRS patterns in the first DMRS pattern set being used currently is a crowded state, where a density of DMRS corresponding to DMRS patterns in the second DMRS pattern set is larger than a density of DMRS corresponding to DMRS patterns in the first DMRS pattern set; and
transmitting the DMRS on the target PRB based on the second DMRS pattern set.

In an embodiment, transmitting the DMRS on the target PRB based on the first DMRS pattern set and the states of DMRS patterns in different DMRS pattern sets being used currently includes:
selecting a third DMRS pattern set in case that a state of DMRS patterns in the first DMRS pattern set being used currently is a crowded state and there is no second DMRS pattern set, where a density of DMRS corresponding to DMRS patterns in the second DMRS pattern set is larger than a density of DMRS corresponding to DMRS patterns in the first DMRS pattern set, and a density of DMRS corresponding to DMRS patterns in the third DMRS pattern set is smaller than the density of the DMRS corresponding to DMRS patterns in the first DMRS pattern set; and
transmitting the DMRS on the target PRB based on the third DMRS pattern set.

It should be noted here that the above-mentioned terminal provided by the embodiments of the present application may implement all the method steps implemented by the above-mentioned method embodiment which may be performed by the terminal, and may achieve the same technical effect. The same parts and beneficial effects as the same method embodiments is not repeated in the present application.

FIG. 8 is a schematic structural diagram of a network device according to an embodiment of the present application. As shown in FIG. 8, the network device includes a memory 820, a transceiver 800 and a processor 810.

The memory 820 is used to store a computer program, the transceiver 800 is used to transmit and receive data under control of the processor 810, and the processor 810 is used to read the computer program in the memory 820 and perform operations of:
transmitting downlink CSI on a target physical resource block (PRB), where the downlink CSI is used to determine a frequency selective fading degree value on the target PRB, and the frequency selective fading degree value is used to determine a first DMRS pattern set; and
receiving a DMRS, where the DMRS is transmitted from a terminal on the target PRB based on the first DMRS pattern set.

In an embodiment, the transceiver 800 is used to receive and transmit data under control of the processor 810.

In FIG. 8, a bus architecture may include any number of interconnected buses and bridges, which are linked together through various circuits of one or more processors represented by the processor 810 and one or more memories represented by the memory 820. The bus architecture may also link together various other circuits, such as peripherals, voltage regulators, and power management circuits, which are well known in the art, and therefore will not be further described in the present application. The bus interface provides an interface. The transceiver 800 may be multiple elements, i.e., including a transmitter and a receiver, units for providing communication with various other devices over transmission media including wireless channels, wired channels, fiber optic cables, and the like. The processor 810 is responsible for managing the bus architecture and general processing, and the memory 820 may store data used by the processor 810 when performing operations.

The processor 810 may be a central processing unit (CPU), an application specific integrated circuit (ASIC), a field-programmable gate array (FPGA), or a complex programmable logic device (CPLD), the processor can also use a multi-core architecture.

In an embodiment, receiving the DMRS includes:
determining a target DMRS pattern, where the target DMRS pattern is a DMRS pattern selected by the terminal from the first DMRS pattern set; and
receiving the DMRS on the target PRB based on the target DMRS pattern.

In an embodiment, receiving the DMRS includes:
receiving first information transmitted from the terminal, where the first information is used to indicate the first DMRS pattern set;
selecting a target DMRS pattern from the first DMRS pattern set;
transmitting second information to the terminal, where the second information is used to indicate the target DMRS pattern; and
receiving the DMRS on the target PRB based on the target DMRS pattern.

In an embodiment, receiving the DMRS includes:
determining, by the terminal, a repeated transmission position for repeatedly transmitting the DMRS on a time domain of the target PRB; and
receiving the DMRS on the target PRB based on the repeated transmission position.

In an embodiment, the operations further include:
transmitting third information to the terminal, where the third information is used to indicate states of DMRS patterns in different DMRS pattern sets being used currently.

In an embodiment, receiving the DMRS includes:
receiving the DMRS in case that a state of DMRS patterns in the first DMRS pattern set being used currently is a crowded state, where the DMRS is transmitted from the terminal on the target PRB based on a second DMRS pattern set, and a density of DMRS corresponding to DMRS patterns in the second DMRS pattern set is larger than a density of DMRS corresponding to DMRS patterns in the first DMRS pattern set.

In an embodiment, receiving the DMRS includes:
receiving the DMRS in case that a state of DMRS patterns in the first DMRS pattern set being used currently is a crowded state and there is no second DMRS pattern set, where the DMRS is transmitted from the terminal on the target PRB based on a third DMRS pattern set, a density of DMRS corresponding to DMRS patterns in the second DMRS pattern set is larger than a density of DMRS corresponding to DMRS patterns in the first DMRS pattern set, and a density of DMRS corresponding to DMRS patterns in the third DMRS pattern set is smaller than the density of the DMRS corresponding to DMRS patterns in the first DMRS pattern set.

In an embodiment, the above-mentioned network device provided by the embodiments of the present application may implement all the method steps implemented by the above-mentioned method embodiment which may be performed by the network device, and may achieve the same technical effect. The same parts and beneficial effects as the same method embodiments are not repeated in the present application.

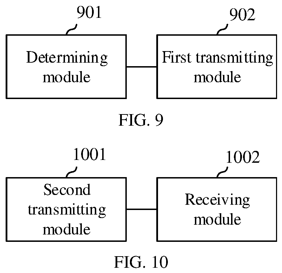

FIG. 9 is a first schematic structural diagram of an apparatus for transmitting a DMRS according to an embodiment of the present application. As shown in FIG. 9, an embodiment of the present application provides an apparatus for transmitting a DMRS, including a determining module 901 and a first transmitting module 902.

The determining module 901 is used for determining a first DMRS pattern set based on a frequency selective fading degree value on a target PRB, and the first transmitting module 902 is used for transmitting the DMRS on the target PRB based on the first DMRS pattern set.

In an embodiment, the apparatus further includes a third transmitting module and a first determining module,
where the third transmitting module is used for receiving downlink CSI transmitted from a network device on the target PRB; and
the first determining module is used for determining the frequency selective fading degree value on the target PRB based on the downlink CSI.

In an embodiment, the determining module includes a first determining sub-module and a second determining sub-module,
where the first determining sub-module is used for determining a value interval to which the frequency selective fading degree value on the target PRB belongs; and
the second determining sub-module is used for determining the first DMRS pattern set based on the value interval and a target mapping relationship table, where the target mapping relationship table includes a one-to-one mapping relationships between value interval of the frequency selective fading degree value and a DMRS pattern set.

In an embodiment, DMRS patterns in different DMRS pattern sets correspond to different densities of DMRS, and DMRS patterns in the same DMRS pattern set correspond to the same density of DMRS.

In an embodiment, a larger frequency selective fading degree value corresponds to a larger density of DMRS, and a smaller frequency selective fading degree value corresponds to a smaller density of DMRS.

In an embodiment, a density of DMRS represents a number of resource elements (REs) occupied when transmitting the DMRS on one orthogonal frequency division multiplexing (OFDM) symbol of one PRB.

In an embodiment, the first transmitting module includes a first selecting sub-module and a first transmitting sub-module,
where the first selecting sub-module is used for selecting a target DMRS pattern from the first DMRS pattern set; and
the first transmitting sub-module is used for transmitting the DMRS on the target PRB based on the target DMRS pattern.

In an embodiment, the first transmitting module includes a second transmitting sub-module, a first receiving sub-module and a third transmitting sub-module,
where the second transmitting sub-module is used for transmitting first information to the network device, where the first information is used to indicate the first DMRS pattern set;
the first receiving sub-module is used for receiving second information transmitted from the network device, where the second information is used to indicate a target DMRS pattern, the target DMRS pattern is selected from the first DMRS pattern set by the network device after receiving the first information; and
the third transmitting sub-module is used for transmitting the DMRS on the target PRB based on the target DMRS pattern.

In an embodiment, the apparatus further includes a first indicating module,
where the first indicating module is used for indicating, to the network device, a repeated transmission position for repeatedly transmitting the DMRS on a time domain of the target PRB.

In an embodiment, the first transmitting module is used for:
transmitting the DMRS on the target PRB based on the first DMRS pattern set and states of DMRS patterns in different DMRS pattern sets being used currently.

In an embodiment, the apparatus further includes a second receiving module,
where the second receiving module is used for receiving third information transmitted from the network device, where the third information is used to indicate the states of DMRS patterns in different DMRS pattern sets being used currently.

In an embodiment, the first transmitting module includes a second selecting sub-module and a fourth transmitting sub-module,
where the second selecting sub-module is used for selecting a second DMRS pattern set in case that a state of DMRS patterns in the first DMRS pattern set being used currently is a crowded state, where a density of DMRS corresponding to DMRS patterns in the second DMRS pattern set is larger than a density of DMRS corresponding to DMRS patterns in the first DMRS pattern set; and
the fourth transmitting sub-module is used for transmitting the DMRS on the target PRB based on the second DMRS pattern set.

In an embodiment, the first transmitting module includes a third selecting sub-module and a fifth transmitting sub-module,
where the third selecting sub-module is used for selecting a third DMRS pattern set in case that a state of DMRS patterns in the first DMRS pattern set being used currently is a crowded state and there is no second DMRS pattern set, where a density of DMRS corresponding to DMRS patterns in the second DMRS pattern set is larger than a density of DMRS corresponding to DMRS patterns in the first DMRS pattern set, and a density of DMRS corresponding to DMRS patterns in the third DMRS pattern set is smaller than the density of the DMRS corresponding to DMRS patterns in the first DMRS pattern set; and
the fifth transmitting sub-module is used for transmitting the DMRS on the target PRB based on the third DMRS pattern set.

In an embodiment, the above-mentioned apparatus for transmitting the DMRS provided by the embodiments of the present application may implement all the method steps implemented by the above-mentioned method embodiment which may be performed by the terminal, and may achieve the same technical effect. The same parts and beneficial effects as the same method embodiments is not repeated in the present application.

FIG. 10 is a second schematic structural diagram of an apparatus for transmitting a DMRS according to an embodiment of the present application. As shown in FIG. 10, an embodiment of the present application further provides an apparatus for transmitting a DMRS, including a second transmitting module 1001 and a receiving module 1002

The second transmitting module 1001 is used for transmitting downlink CSI on a target PRB, where the downlink CSI is used to determine a frequency selective fading degree value on the target PRB, and the frequency selective fading degree value is used to determine a first DMRS pattern set; and the receiving module 1002 is used for receiving the DMRS, where the DMRS is transmitted from a terminal on the target PRB based on the first DMRS pattern set.

In an embodiment, the receiving module includes a third determining sub-module and a second receiving sub-module,
where the third determining sub-module is used for determining a target DMRS pattern, where the target DMRS pattern is a DMRS pattern selected by the terminal from the first DMRS pattern set; and
the second receiving sub-module is used for receiving the DMRS on the target PRB based on the target DMRS pattern.

In an embodiment, the receiving module includes a third receiving sub-module, a fourth selecting sub-module, a sixth transmitting sub-module and a fourth receiving sub-module,
where the third receiving sub-module is used for receiving first information transmitted from the terminal, where the first information is used to indicate the first DMRS pattern set;
the fourth selecting sub-module is used for selecting a target DMRS pattern from the first DMRS pattern set;
the sixth transmitting sub-module is used for transmitting second information to the terminal, where the second information is used to indicate the target DMRS pattern; and
the fourth receiving sub-module is used for receiving the DMRS on the target PRB based on the target DMRS pattern.

In an embodiment, the receiving module includes a fourth determining sub-module and a fifth receiving sub-module,
where the fourth determining sub-module is used for determining, by the terminal, a repeated transmission position for repeatedly transmitting the DMRS on a time domain of the target PRB; and
the fifth receiving sub-module is used for receiving the DMRS on the target PRB based on the repeated transmission position.

In an embodiment, the apparatus further includes a third transmitting module,
where the third transmitting module is used for transmitting third information to the terminal, where the third information is used to indicate states of DMRS patterns in different DMRS pattern sets being used currently.

In an embodiment, the receiving module is used for:
receiving the DMRS in case that a state of DMRS patterns in the first DMRS pattern set being used currently is a crowded state, where the DMRS is transmitted from the terminal on the target PRB based on a second DMRS pattern set, and a density of DMRS corresponding to DMRS patterns in the second DMRS pattern set is larger than a density of DMRS corresponding to DMRS patterns in the first DMRS pattern set.

In an embodiment, the receiving module is used for:
receiving the DMRS in case that a state of DMRS patterns in the first DMRS pattern set being used currently is a crowded state and there is no second DMRS pattern set, where the DMRS is transmitted from the terminal on the target PRB based on a third DMRS pattern set, a density of DMRS corresponding to DMRS patterns in the second DMRS pattern set is larger than a density of DMRS corresponding to DMRS patterns in the first DMRS pattern set, and a density of DMRS corresponding to DMRS patterns in the third DMRS pattern set is smaller than the density of the DMRS corresponding to DMRS patterns in the first DMRS pattern set.

In an embodiment, the above-mentioned apparatus for transmitting the DMRS provided by the embodiments of the present application may implement all the method steps implemented by the above-mentioned method embodiment which may be performed by the network device, and may achieve the same technical effect. The same parts and beneficial effects as the same method embodiments is not repeated in the present application.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as U disk, mobile hard disk, read-only memory (ROM), random access memory (RAM), magnetic disk, or a compact disk.

An embodiment of the present application further provides a computer-readable storage medium storing a computer program that cause a computer to perform the steps of the method for transmitting the DMRS described above.

In an embodiment, the above-mentioned computer-readable storage medium provided by the embodiments of the present application may implement all the method steps implemented by the above-mentioned method embodiments, and may achieve the same effect. The same parts and beneficial effects as the same method embodiments is not repeated in the present application.

The computer-readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

In the embodiments of the present application, terms "first", "second" are used to distinguish similar objects and are not used to describe a particular order or sequence. It should be understood that these terms are interchangeable under appropriate circumstances so that the embodiments of the present application may be practiced in sequences other than those illustrated or described herein. The objects distinguished by "first" or "second" are usually of one type, and the number of objects is not limited. For example, the first object may be one or multiple.

In the embodiments of the present application, the term "and/or" describes a related relationship of associated objects, and indicates that there may be three kinds of relationships. For example, A and/or B may represent that A exists alone, A and B exist simultaneously, and B exists alone. Character "j" generally indicates that the associated objects have an "or" relationship.

In the embodiments of the present application, the term "multiple" refers to two or more than two, and other quantifiers are similar.

Solutions provided by the embodiments of the present application may be applicable to various systems, especially 5G systems. For example, applicable systems may be a global system of mobile communication (GSM) system, a code division multiple access (CDMA) system, a wideband code division multiple access (WCDMA) general packet wireless service (general packet radio service, GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a user equipment and a network side device. The system may also include a core network part, such as an evolved packet system (EPS), a 5G system (5GS), and the like.

The terminal in the embodiments of the present application may be a device that provides voice and/or data connectivity to a user, a handheld device with a wireless connection function, or other processing device connected to a wireless modem. In different systems, the names of the terminal may be different. For example, in the 5G system, the terminal device may be called as user equipment (UE). A wireless terminal may communicate with one or more core networks (CN) via a radio access network (RAN), and the wireless terminal may be a mobile terminal, such as a mobile phone (or "cellular "phone) and computers with mobile terminal, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network device according to the embodiments of the present application may be a base station, and the base station may include a plurality of cells providing services for the terminal device. Depending on the specific application, the network side device may also be called an access point, or may be a device in the access network that communicates with wireless terminal through one or more sectors on the air interface, or other names. Network device may be used to exchange received air frames with Internet Protocol (IP) packets, and act as a router between radio terminal and the rest of the access network, and the rest of the access network may include an Internet protocol (IP) communication network. The network side devices may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network side device may include a centralized unit (CU) node and a distributed unit (DU) node, and the centralized unit and the distributed unit may also be geographically separated.

The network device and the terminal device may each use one or more antennas for multi-input multi-output (MIMO) transmission. MIMO transmission may be single user MIMO (SU-MIMO) or multi-user MIMO (MU-MIMO). Based on the shape and number of antenna combinations, MIMO transmission may be 2D-MIMO, 3D-MIMO, FD-MIMO or massive-MIMO, or it may be diversity transmission, precoding transmission or beamforming transmission, etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for transmitting a demodulation reference signal, DMRS, comprising:
determining a first DMRS pattern set based on a frequency selective fading degree value on a target physical resource block, PRB; and
transmitting the DMRS on the target PRB based on the first DMRS pattern set.

2. The method of claim 1, further comprising:
receiving downlink channel state information, CSI, transmitted from a network device on the target PRB; and
determining the frequency selective fading degree value on the target PRB based on the downlink CSI.

3. The method of claim 1, wherein determining the first DMRS pattern set based on the frequency selective fading degree value on the target PRB comprises:
determining a value interval to which the frequency selective fading degree value on the target PRB belongs; and
determining the first DMRS pattern set based on the value interval and a target mapping relationship table, wherein the target mapping relationship table comprises a one-to-one mapping relationship between the value interval to which the frequency selective fading degree value belongs and a DMRS pattern set.

4. The method of claim 3, wherein DMRS patterns in different DMRS pattern sets correspond to different densities of DMRS, and DMRS patterns in the same DMRS pattern set correspond to the same density of DMRS.

5. The method of claim 3, wherein a larger frequency selective fading degree value corresponds to a larger density of DMRS, and a smaller frequency selective fading degree value corresponds to a smaller density of DMRS.

6. The method of claim 4 or 5, wherein a density of DMRS represents a number of resource elements, REs, occupied when transmitting the DMRS on one orthogonal frequency division multiplexing, OFDM, symbol of one PRB.

7. The method of claim 1, wherein transmitting the DMRS on the target PRB based on the first DMRS pattern set comprises:
selecting a target DMRS pattern from the first DMRS pattern set; and
transmitting the DMRS on the target PRB based on the target DMRS pattern.

8. The method of claim 1, wherein transmitting the DMRS on the target PRB based on the first DMRS pattern set comprises:
transmitting first information to a network device, wherein the first information is used to indicate the first DMRS pattern set;
receiving second information transmitted from the network device, wherein the second information is used to indicate a target DMRS pattern, and the target DMRS pattern is selected from the first DMRS pattern set by the network device after receiving the first information; and
transmitting the DMRS on the target PRB based on the target DMRS pattern.

9. The method of claim 1, further comprising:
indicating, to a network device, a repeated transmission position for repeatedly transmitting the DMRS on a time domain of the target PRB.

10. The method of claim 1, wherein transmitting the DMRS on the target PRB based on the first DMRS pattern set comprises:
transmitting the DMRS on the target PRB based on the first DMRS pattern set and states of DMRS patterns in different DMRS pattern sets being used currently.

11. The method of claim 10, further comprising:
receiving third information transmitted from a network device, wherein the third information is used to indicate the states of DMRS patterns in different DMRS pattern sets being used currently.

12. The method of claim 10, wherein transmitting the DMRS on the target PRB based on the first DMRS pattern set and the states of DMRS patterns in different DMRS pattern sets being used currently comprises:
selecting a second DMRS pattern set in case that a state of DMRS patterns in the first DMRS pattern set being used currently is a crowded state, wherein a density of DMRS corresponding to DMRS patterns in the second DMRS pattern set is larger than a density of DMRS corresponding to DMRS patterns in the first DMRS pattern set; and
transmitting the DMRS on the target PRB based on the second DMRS pattern set.

13. The method of claim 10, wherein transmitting the DMRS on the target PRB based on the first DMRS pattern set and the states of DMRS patterns in different DMRS pattern sets being used currently comprises:
selecting a third DMRS pattern set in case that a state of DMRS patterns in the first DMRS pattern set being used currently is a crowded state and there is no second DMRS pattern set, wherein a density of DMRS corresponding to DMRS patterns in the second DMRS pattern set is larger than a density of DMRS corresponding to DMRS patterns in the first DMRS pattern set, and a density of DMRS corresponding to DMRS patterns in the third DMRS pattern set is smaller than the density of the DMRS corresponding to DMRS patterns in the first DMRS pattern set; and
transmitting the DMRS on the target PRB based on the third DMRS pattern set.

14. A method for transmitting a demodulation reference signal, DMRS, comprising:
transmitting downlink channel state information, CSI, on a target physical resource block, PRB, wherein the downlink CSI is used to determine a frequency selective fading degree value on the target PRB, and the frequency selective fading degree value is used to determine a first DMRS pattern set; and
receiving the DMRS, wherein the DMRS is transmitted from a terminal on the target PRB based on the first DMRS pattern set.

15. The method of claim 14, wherein receiving the DMRS comprises:
receiving first information transmitted from the terminal, wherein the first information is used to indicate the first DMRS pattern set;
selecting a target DMRS pattern from the first DMRS pattern set;
transmitting second information to the terminal, wherein the second information is used to indicate the target DMRS pattern; and
receiving the DMRS on the target PRB based on the target DMRS pattern.

16. The method of claim 14, wherein receiving the DMRS comprises:
determining, by the terminal, a repeated transmission position for repeatedly transmitting the DMRS on a time domain of the target PRB; and
receiving the DMRS on the target PRB based on the repeated transmission position.

17. The method of claim 14, further comprising:
transmitting third information to the terminal, wherein the third information is used to indicate states of DMRS patterns in different DMRS pattern sets being used currently.

18. The method of claim 17, wherein receiving the DMRS comprises:
receiving the DMRS in case that a state of DMRS patterns in the first DMRS pattern set being used currently is a crowded state, wherein the DMRS is transmitted from the terminal on the target PRB based on a second DMRS pattern set, and a density of DMRS corresponding to DMRS patterns in the second DMRS pattern set is larger than a density of DMRS corresponding to DMRS patterns in the first DMRS pattern set.

19. The method of claim 17, wherein receiving the DMRS comprises:
receiving the DMRS in case that a state of DMRS patterns in the first DMRS pattern set being used currently is a crowded state and there is no second DMRS pattern set, wherein the DMRS is transmitted from the terminal on the target PRB based on a third DMRS pattern set, a density of DMRS corresponding to DMRS patterns in the second DMRS pattern set is larger than a density of DMRS corresponding to DMRS patterns in the first DMRS pattern set, and a density of DMRS corresponding to DMRS patterns in the third DMRS pattern set is smaller than the density of the DMRS corresponding to DMRS patterns in the first DMRS pattern set.

20. A terminal, comprising a memory, a transceiver and a processor,
wherein the memory is used to store a computer program, the transceiver is used to transmit and receive data under control of the processor, and the processor is used to read the computer program in the memory and perform operations of:
determining a first demodulation reference signal, DMRS, pattern set based on a frequency selective fading degree value on a target physical resource block, PRB; and
transmitting a DMRS on the target PRB based on the first DMRS pattern set.

21. The terminal of claim 20, wherein the operations further comprise:
receiving downlink channel state information, CSI, transmitted from a network device on the target PRB; and
determining the frequency selective fading degree value on the target PRB based on the downlink CSI.

22. The terminal of claim 20, wherein determining the first DMRS pattern set based on the frequency selective fading degree value on the target PRB comprises:
determining a value interval to which the frequency selective fading degree value on the target PRB belongs; and
determining the first DMRS pattern set based on the value interval and a target mapping relationship table, wherein the target mapping relationship table comprises a one-to-one mapping relationship between the value interval to which the frequency selective fading degree value belongs and a DMRS pattern set.

23. The terminal of claim 22, wherein DMRS patterns in different DMRS pattern sets correspond to different densities of DMRS, and DMRS patterns in the same DMRS pattern set correspond to the same density of DMRS.

24. The terminal of claim 22, wherein a larger frequency selective fading degree value corresponds to a larger density of DMRS, and a smaller frequency selective fading degree value corresponds to a smaller density.

25. The terminal of claim 23 or 24, wherein a density of DMRS represents a number of resource elements, REs, occupied when transmitting the DMRS on one orthogonal frequency division multiplexing, OFDM, symbol of one PRB.

26. The terminal of claim 20, wherein transmitting the DMRS on the target PRB based on the first DMRS pattern set comprises:
selecting a target DMRS pattern from the first DMRS pattern set; and
transmitting the DMRS on the target PRB based on the target DMRS pattern.

27. The terminal of claim 20, wherein transmitting the DMRS on the target PRB based on the first DMRS pattern set comprises:
transmitting first information to a network device, wherein the first information is used to indicate the first DMRS pattern set;
receiving second information transmitted from the network device, wherein the second information is used to indicate a target DMRS pattern, and the target DMRS pattern is selected from the first DMRS pattern set by the network device after receiving the first information; and
transmitting the DMRS on the target PRB based on the target DMRS pattern.

28. The terminal of claim 20, wherein the operations further comprise:
indicating a repeated transmission position for repeatedly transmitting the DMRS on a time domain of the target PRB to a network device.

29. The terminal of claim 20, wherein transmitting the DMRS on the target PRB based on the first DMRS pattern set comprises:
transmitting the DMRS on the target PRB based on the first DMRS pattern set and states of DMRS patterns in different DMRS pattern sets being used currently.

30. The terminal of claim 29, wherein the operations further comprise:
receiving third information transmitted from a network device, wherein the third information is used to indicate the states of DMRS patterns in different DMRS pattern sets being used currently.

31. The terminal of claim 29, wherein transmitting the DMRS on the target PRB based on the first DMRS pattern set and the states of DMRS patterns in different DMRS pattern sets being used currently comprises:
selecting a second DMRS pattern set in case that a state of DMRS patterns in the first DMRS pattern set being used currently is a crowded state, wherein a density of DMRS corresponding to DMRS patterns in the second DMRS pattern set is larger than a density of DMRS corresponding to DMRS patterns in the first DMRS pattern set; and
transmitting the DMRS on the target PRB based on the second DMRS pattern set.

32. The terminal of claim 29, wherein transmitting the DMRS on the target PRB based on the first DMRS pattern set and the state of DMRS patterns in different DMRS pattern sets being used currently comprises:
selecting a third DMRS pattern set in case that a state of DMRS patterns in the first DMRS pattern set being used currently is a crowded state and there is no second DMRS pattern set, wherein a density of DMRS corresponding to DMRS patterns in the second DMRS pattern set is larger than a density of DMRS corresponding to DMRS patterns in the first DMRS pattern set, and a density of DMRS corresponding to DMRS patterns in the third DMRS pattern set is smaller than the density of the DMRS corresponding to DMRS patterns in the first DMRS pattern set; and
transmitting the DMRS on the target PRB based on the third DMRS pattern set.

33. A network device, comprising a memory, a transceiver and a processor,
wherein the memory is used to store a computer program, the transceiver is used to transmit and receive data under control of the processor, and the processor is used to read the computer program in the memory and perform operations of:
transmitting downlink channel state information, CSI, on a target physical resource block, PRB, wherein the downlink CSI is used to determine a frequency selective fading degree value on the target PRB, and the frequency selective fading degree value is used to determine a first demodulation reference signal, DMRS, pattern set; and
receiving a DMRS, wherein the DMRS is transmitted from a terminal on the target PRB based on the first DMRS pattern set.

34. The network device of claim 33, wherein receiving the DMRS comprises:
receiving first information transmitted from the terminal, wherein the first information is used to indicate the first DMRS pattern set;
selecting a target DMRS pattern from the first DMRS pattern set;
transmitting second information to the terminal, wherein the second information is used to indicate the target DMRS pattern; and
receiving the DMRS on the target PRB based on the target DMRS pattern.

35. An apparatus for transmitting a demodulation reference signal, DMRS, comprising:
a determining module, used for determining a first DMRS pattern set based on a frequency selective fading degree value on a target physical resource block, PRB; and
a first transmitting module, used for transmitting the DMRS on the target PRB based on the first DMRS pattern set.

36. The apparatus of claim 35, further comprising a third transmitting module and a first determining module,
wherein the third transmitting module is used for receiving downlink channel state information, CSI, transmitted from a network device on the target PRB; and
the first determining module is used for determining the frequency selective fading degree value on the target PRB based on the downlink CSI.

37. The apparatus of claim 35, wherein the determining module comprises a first determining sub-module and a second determining sub-module,
wherein the first determining sub-module is used for determining a value interval to which the frequency selective fading degree value on the target PRB belongs; and
the second determining sub-module is used for determining the first DMRS pattern set based on the value interval and a target mapping relationship table, wherein the target mapping relationship table comprises a one-to-one mapping relationship between the value interval of the frequency selective fading degree value and a DMRS pattern set.

38. The apparatus of claim 37, wherein DMRS patterns in different DMRS pattern sets correspond to different densities of DMRS, and DMRS patterns in the same DMRS pattern set correspond to the same density of DMRS.

39. The apparatus of claim 37, wherein a larger frequency selective fading degree value corresponds to a larger density of DMRS, and a smaller frequency selective fading degree value corresponds to a smaller density of DMRS.

40. The apparatus of claim 38 or 39, wherein a density of DMRS represents a number of resource elements, REs, occupied when transmitting the DMRS on one orthogonal frequency division multiplexing, OFDM, symbol of one PRB.

41. The apparatus of claim 35, wherein the first transmitting module comprises a first selecting sub-module and a first transmitting sub-module,
wherein the first selecting sub-module is used for selecting a target DMRS pattern from the first DMRS pattern set; and
the first transmitting sub-module is used for transmitting the DMRS on the target PRB based on the target DMRS pattern.

42. The apparatus of claim 35, wherein the first transmitting module comprises a second transmitting sub-module, a first receiving sub-module and a third transmitting sub-module,
wherein the second transmitting sub-module is used for transmitting first information to a network device, wherein the first information is used to indicate the first DMRS pattern set;
the first receiving sub-module is used for receiving second information transmitted from the network device, wherein the second information is used to indicate a target DMRS pattern, the target DMRS pattern is selected from the first DMRS pattern set by the network device after receiving the first information; and
the third transmitting sub-module is used for transmitting the DMRS on the target PRB based on the target DMRS pattern.

43. The apparatus of claim 35, further comprising a first indicating module,
wherein the first indicating module is used for indicating a repeated transmission position for repeatedly transmitting the DMRS on a time domain of the target PRB to a network device.

44. The apparatus of claim 35, wherein the first transmitting module is used for:
transmitting the DMRS on the target PRB based on the first DMRS pattern set and states of DMRS patterns in different DMRS pattern sets being used currently.

45. The apparatus of claim 44, further comprising a second receiving module,
wherein the second receiving module is used for receiving third information transmitted from a network device, wherein the third information is used to indicate the states of DMRS patterns in different DMRS pattern sets being used currently.

46. The apparatus of claim 44, wherein the first transmitting module comprises a second selecting sub-module and a fourth transmitting sub-module,
wherein the second selecting sub-module is used for selecting a second DMRS pattern set in case that a state of DMRS patterns in the first DMRS pattern set being used currently is a crowded state, a density of DMRS corresponding to DMRS patterns in the second DMRS pattern set is larger than a density of DMRS corresponding to DMRS patterns in the first DMRS pattern set; and
the fourth transmitting sub-module is used for transmitting the DMRS on the target PRB based on the second DMRS pattern set.

47. The apparatus of claim 44, wherein the first transmitting module comprises a third selecting sub-module and a fifth transmitting sub-module,
wherein the third selecting sub-module is used for selecting a third DMRS pattern set in case that a state of DMRS patterns in the first DMRS pattern set being used currently is a crowded state and there is no second DMRS pattern set, wherein a density of DMRS corresponding to DMRS patterns in the second DMRS pattern set is larger than a density of DMRS corresponding to DMRS patterns in the first DMRS pattern set, and a density of DMRS corresponding to DMRS patterns in the third DMRS pattern set is smaller than the density of the DMRS corresponding to DMRS patterns in the first DMRS pattern set; and
the fifth transmitting sub-module is used for transmitting the DMRS on the target PRB based on the third DMRS pattern set.

48. An apparatus for transmitting a demodulation reference signal, DMRS, comprising:
a second transmitting module, used for transmitting downlink channel state information, CSI, on a target physical resource block, PRB, wherein the downlink CSI is used to determine a frequency selective fading degree value on the target PRB, and the frequency selective fading degree value is used to determine a first DMRS pattern set; and
a receiving module, used for receiving the DMRS, wherein the DMRS is transmitted from a terminal on the target PRB based on the first DMRS pattern set.

49. The apparatus of claim 48, wherein the receiving module comprises a third receiving sub-module, a fourth selecting sub-module, a sixth transmitting sub-module and a fourth receiving sub-module,
wherein the third receiving sub-module is used for receiving first information transmitted from the terminal, wherein the first information is used to indicate the first DMRS pattern set;
the fourth selecting sub-module is used for selecting a target DMRS pattern from the first DMRS pattern set;
the sixth transmitting sub-module is used for transmitting second information to the terminal, wherein the second information is used to indicate the target DMRS pattern; and
the fourth receiving sub-module is used for receiving the DMRS on the target PRB based on the target DMRS pattern.

50. The apparatus of claim 48, wherein the receiving module comprises a fourth determining sub-module and a fifth receiving sub-module,
wherein the fourth determining sub-module is used for determining, by the terminal, a repeated transmission position for repeatedly transmitting the DMRS on a time domain of the target PRB; and
the fifth receiving sub-module is used for receiving the DMRS on the target PRB based on the repeated transmission position.

51. The apparatus of claim 48, further comprising a third transmitting module,
wherein the third transmitting module is used for transmitting third information to the terminal, wherein the third information is used to indicate states of DMRS patterns in different DMRS pattern sets being used currently.

52. The apparatus of claim 51, wherein the receiving module is used for:
receiving the DMRS in case that a state of DMRS patterns in the first DMRS pattern set being used currently is a crowded state, wherein the DMRS is transmitted from the terminal on the target PRB based on a second DMRS pattern set, and a density of DMRS corresponding to DMRS patterns in the second DMRS pattern set is larger than a density of DMRS corresponding to DMRS patterns in the first DMRS pattern set.

53. The apparatus of claim 51, wherein the receiving module is used for:
receiving the DMRS in case that a state of DMRS patterns in the first DMRS pattern set being used currently is a crowded state and there is no second DMRS pattern set, wherein the DMRS is transmitted from the terminal on the target PRB based on a third DMRS pattern set, a density of DMRS corresponding to DMRS patterns in the second DMRS pattern set is larger than a density of DMRS corresponding to DMRS patterns in the first DMRS pattern set, and a density of DMRS corresponding to DMRS patterns in the third DMRS pattern set is smaller than the density of the DMRS corresponding to DMRS patterns in the first DMRS pattern set.

54. A computer-readable storage medium storing a computer program, that causes, a computer to perform the method of any one of claims 1 to 19.
